(19) **Europäisches Patentamt**
**European Patent Office**
**Office européen des brevets**

(11) **EP 2 860 084 B1**

(12) **EUROPÄISCHE PATENTSCHRIFT**

(45) Veröffentlichungstag und Bekanntmachung des Hinweises auf die Patenterteilung:
**21.12.2016   Patentblatt 2016/51**

(51) Int Cl.:
***B62D 13/06*** *(2006.01)*     ***B62D 15/02*** *(2006.01)*

(21) Anmeldenummer: **14199103.4**

(22) Anmeldetag: **11.02.2013**

(54) **Assistenzvorrichtungen und Verfahren zum Betreiben einer Assistenzvorrichtung zur Fahrtsteuerung eines Zugfahrzeugs mit Anhänger**

Assistance devices and method for operating an assistance device for controlling the driving of a traction vehicle with trailer

Dispositifs d'assistance et procédé de fonctionnement d'un dispositif d'assistance pour le pilotage d'un véhicule de traction avec remorque

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2012   DE 102012006207**

(43) Veröffentlichungstag der Anmeldung:
**15.04.2015   Patentblatt 2015/16**

(62) Dokumentnummer(n) der früheren Anmeldung(en) nach Art. 76 EPÜ:
**13154808.3 / 2 644 477**

(73) Patentinhaber: **Volkswagen Aktiengesellschaft 38440 Wolfsburg (DE)**

(72) Erfinder:
• **Greifendorf, Kathrin**
  **38518 Gifhorn (DE)**
• **Hüger, Philipp**
  **38471 Rühen (DE)**
• **Wuttke, Ulrich**
  **38126 Braunschweig (DE)**
• **Bullmann, Christoph**
  **10117 Berlin (DE)**
• **Fietz, Alexander**
  **10553 Berlin (DE)**

(56) Entgegenhaltungen:
**DE-A1- 10 322 828       DE-A1-102008 004 158 US-A1- 2007 027 581**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft Verfahren zum Betreiben einer Assistenzvorrichtung zur Fahrtsteuerung eines Zugfahrzeugs mit Anhänger. Die Erfindung betrifft weiterhin entsprechende Assistenzvorrichtungen.

Steuern eines Zugfahrzeugs mit einem Anhänger stellt eine anspruchsvolle Fahrtaufgabe dar. Insbesondere kann aufgrund der Verbindung des Anhängers mit dem Zugfahrzeug mittels einer Kupplung mit endlicher Deichsellänge eine vergleichsweise komplizierte Reaktion des Gespanns aus dem Zugfahrzeug und dem Anhänger auf eine Lenkbewegung eines Fahrers des Zugfahrzeugs resultieren. Zielgenaues und präzises Navigieren oder Rangieren des Gespanns ist daher vergleichsweise anspruchsvoll.

Es sind Assistenzvorrichtungen zur Fahrtsteuerung eines solchen Gespanns bekannt, welche den Fahrer beim Steuern des Gespanns unterstützen, bzw. die Steuerung automatisch durchführen. Solche Assistenzvorrichtungen sind z.B. durch einen Steuer-Regel-Kreis implementiert, welcher aktiv in die Lenkung des Zugfahrzeugs eingreift. Das Steuern erfolgt basierend z.B. auf Odometriedaten des Gespanns, welche etwa die Deichsellänge umfassen können. Es ist auch möglich, den Antrieb des Fahrzeugs automatisch zu steuern oder aber eine kombinierte manuelle und automatische Steuerung zu erreichen, bei der z.B. der Fahrer den Antrieb auf Anweisung der Vorrichtung steuert. Der Fahrer kann hierbei z.B. Gangwechsel vornehmen und das Gaspedal gezielt betätigen.

Zum Beispiel ist aus DE 103 22 828 A1 ein Steuerungssystem für ein Gespann aus einem Zugfahrzeug und einem Anhänger bekannt, bei welchem der Fahrer einen Soll-Anhängerlenkwinkel eingeben kann. Eine Ausführungsform des Steuerungssystems betrifft eine optische Zielerkennungseinrichtung, welche es erlaubt, den Soll-Anhängerlenkwinkel in Bezug auf ein optisch erkanntes Ziel vorzugeben.

Das Dokument US2007/027581 ist als nächstliegender Stand der Technik nach dem Oberbegriff des Anspruchs 1 zu sehen.

Solche und entsprechende Techniken können den Nachteil einer hohen Systemkomplexität und damit verbundener Fehleranfälligkeit aufgrund von zum Beispiel Fehleingaben des Fahrers und/oder Fehlererkennungen einer optischen Zielführungseinrichtung haben. Zum Beispiel erfordert das Vorgeben eines Soll-Anhängerknickwinkels durch den Fahrer ein hohes Maß an räumlichem Abstraktionsvermögen und ist insbesondere in Park- oder Rangiersituationen schwierig handhabbar. Weiterhin kann ein optisches Zielführungssystem diese Komplexität nur unter bestimmten Vorraussetzungen reduzieren. So kann es nämlich notwendig sein, dass das optische Zielführungssystem auf vordefinierte Orientierungspunkte zurückgreift, wie sie zum Beispiel fest definierte Zielpositionen, z.B. Laderampen, oder Fahrbahnmarkierungen, z.B. in Rangierhöfen, darstellen. In jedem Fall ist die Flexibilität von solchen optischen Zielführungssystemen eingeschränkt, so dass bei individuellen Park- oder Rangiersituationen diese Systeme an ihre technischen Limitationen stoßen oder ein hohes Maß des Benutzereingriffs notwendig ist. Dies wiederum erhöht die Anforderungen an den Fahrer, so dass die Bedienkomplexität ansteigt. Den bekannten Techniken zur Fahrsteuerung eines Zugfahrzeugs mit Anhänger ist also ein hohes Maß an Komplexität in der Bedienung und/oder Komplexität in der Systemimplementierung gemein.

Dementsprechend besteht ein Bedarf, eine verbesserte Assistenzvorrichtung zur Fahrsteuerung eines Zugfahrzeugs mit Anhänger und ein verbessertes Verfahren zum Betreiben einer solchen Assistenzvorrichtung bereitzustellen. Insbesondere besteht ein Bedarf an Vorrichtungen und Verfahren mit erhöhter Flexibilität, welche es erlauben, auch in individuellen und speziellen Rangiersituationen eine umfassende Assistenz durch einfache Benutzersteuerung zu ermöglichen sowie einen zuverlässigen und ausfallsicheren Betrieb der Assistenzvorrichtung zu erlauben.

Es werden Vorrichtungen und Verfahren mit den in den unabhängigen Ansprüchen definierten Merkmalen angegeben. Die abhängigen Ansprüche definieren Ausführungsformen.

Gemäß einem Aspekt betrifft die Erfindung ein Verfahren zum Betreiben einer Assistenzvorrichtung zur Fahrtsteuerung eines Zugfahrzeugs mit Anhänger. Das Verfahren umfasst das Erfassen einer Position und einer Ausrichtung des Anhängers, das Bestimmen einer geraden Trajektorie basierend auf der Position und der Ausrichtung des Anhängers und das Steuern der Fahrt des Zugfahrzeugs zum Erreichen einer Zielposition, wobei in der Zielposition die Ausrichtung des Anhängers und eine Ausrichtung des Zugfahrzeugs jeweils im Wesentlichen parallel zu einer durch die Trajektorie definierten Richtung sind.

Ein solches Verfahren kann ein besonderes einfaches Betreiben der Assistenzvorrichtung erlauben. Zum Beispiel kann es möglich sein, das Gespann aus Zugfahrzeug und Anhänger durch manuelles Rangieren in eine Position zu bringen, in der der Anhänger bereits eine zur gewünschten Zielposition im Wesentlichen parallele Ausrichtung angenommen hat. Es kann also möglich sein, beim Rangieren eine aktuelle Ausrichtung und Position des Anhängers als Sollwert zu übernehmen und zum Erreichen der Zielposition beizubehalten. Ein denkbares Szenario betrifft die manuelle Einfahrt des Anhängers in eine enge Gasse, wie zum Beispiel eine Hofeinfahrt etc. Während sich in einer solchen Situation der Anhänger bereits parallel zur Trajektorie ausgerichtet befinden kann, die etwa parallel zu der engen Gasse verläuft, kann es möglich sein, dass das Zugfahrzeug noch eine Ausrichtung einnimmt, welche nicht parallel zur Ausrichtung der Trajektorie und damit zu der der Zielposition ist. Zum Beispiel kann die Position des Anhängers in Bezug auf dessen Mittelpunkt bestimmt sein. Es ist auch möglich, dass die Position des Zugfahrzeugs in Bezug auf dessen Mittelpunkt bestimmt ist. Die Ausrichtung von Zugfahrzeug bzw. Anhänger kann eine Ausrichtung der entsprechenden Längsachsen bezeichnen, z. B. durch deren Mittelpunkte und einen Kupplungs-Punkt zwischen diesen Längsachsen verlaufend. Der Winkel zwischen diesen Längsachsen kann einen Anhängerknickwinkel bezeichnen.

In obigem Szenario kann dies insbesondere der Fall sein, wenn der Anhängerknickwinkel zu diesem Zeitpunkt einen Wert ungleich von Null annimmt, also der Winkel zwischen den Längsachsen von Zugfahrzeug und Anhänger einen endlichen Wert einnimmt. Dies bedeutet, dass Anhänger und Zugfahrzeug nicht parallel stehen. Ein anschließendes Steuern des Zugfahrzeugs zum Erreichen der Zielposition kann dann automatisch möglich sein, so dass ein besonders einfaches Betreiben der Assistenzvorrichtung ermöglicht wird. Insbesondere kann die Ausrichtung des Anhängers und des Zugfahrzeugs in der Zielposition parallel oder im Wesentlichen parallel zu der Trajektorie sein.

Zum Beispiel kann in der Zielposition mindestens eines der folgenden Kriterien erfüllt sein: der Anhängerknickwinkel zwischen dem Zugfahrzeug und dem Anhänger ist kleiner als ein Anhängerknickwinkel-Schwellenwert; und die Position des Anhängers entlang der Richtung der Trajektorie ist gleich einem bestimmten Wert; und ein senkrecht zur Richtung der Trajektorie definierter Abstand zwischen der Trajektorie und der Position des Anhängers ist kleiner als ein Abstand-Schwellenwert.

Zum Beispiel kann der Anhängerknickwinkel-Schwellenwert durch eine systembedingte Genauigkeit gegeben sein, jedoch möglichst klein gewählt werden. Dann kann nämlich eine möglichst parallele Ausrichtung des Zugfahrzeugs und des Anhängers jeweils parallel zu der ursprünglich definierten Trajektorie erfolgen. Zum Beispiel kann der Anhängerknickwinkel-Schwellenwert kleiner als 2° oder 1° oder 1/10° sein. Solche Werte beschreiben typischerweise die Genauigkeit einer automatischen Fahrtsteuerung des Zugfahrzeugs und des Anhängers bzw. die Genauigkeit in der Erfassung des Anhängerknickwinkels. Die Ausrichtung des Anhängers und des Zugfahrzeugs können dann jeweils im Wesentlichen parallel zu der durch die Trajektorie definierten Richtung sein. Es ist also möglich, dass in der Zielposition der Anhängerknickwinkel minimiert wird.

Die Zielposition kann z. B. nicht allein durch die Ausrichtung des Anhängers und die Ausrichtung des Zugfahrzeugs jeweils im Wesentlichen parallel zu der durch die Trajektorie definierten Richtung bestimmt sein, sondern weiterhin durch eine bestimmte Position des Anhängers entlang der Trajektorie bestimmt sein. Die Richtung entlang der geraden Trajektorie sei im Folgenden mit der Koordinate $y$ bezeichnet. Diesbezüglich kann es möglich sein, dass der Fahrer während dem automatischen Steuern der Fahrt des Zugfahrzeugs, z.B. durch automatisches Steuern dessen Lenkung, aufgefordert wird, durch Betätigen des Gaspedals des Zugfahrzeugs, Vorwärts- und/oder Rückwärtsbewegung des Zugfahrzeugs hervorzurufen. In einem solchen Fall kann es möglich sein, dass der Fahrer des Zugfahrzeugs die $y$-Position, d.h. die Position entlang der geraden Trajektorie, durch gezieltes Betätigen des Gaspedals manuell vorgibt. Es ist aber auch denkbar, dass die $y$-Position zum Beispiel durch Verwendung frontseitiger oder heckseitiger Abstand-Sensorik automatisch gleich dem bestimmten Wert ermittelt wird. Es kann auch möglich sein, dass die $y$-Position durch den Fahrer zum Beispiel vor dem Steuern der Fahrt des Zugfahrzeugs gleich dem bestimmten Wert manuell vorgegeben wird und die Steuerung, z. B. des Antriebs, dann automatisch erfolgt. Insbesondere wenn das Steuern der Fahrt des Zugfahrzeugs zum Beispiel in dem oben genannten Szenario der engen Gasse geschieht, kann durch manuelles Betätigen des Gaspedals durch den Fahrer erreicht werden, dass das Gespann entlang der Trajektorie an einer gewünschten $y$-Position, zum Beispiel in der Mitte der Einfahrt, zum Stehen kommt.

Der senkrecht zur Richtung der Trajektorie definierte Abstand, z. B. zu dem Mittelpunkt des Anhängers oder des Zugfahrzeugs, sei im Folgenden als $x$-Position bezeichnet. Erfolgt das Steuern der Fahrt des Zugfahrzeugs so, dass in der Zielposition der $x$-Abstand kleiner als ein Abstand-Schwellenwert ist, so kann es möglich sein, das Steuern hinsichtlich verschiedener Kriterien zu verbessern: Je nach Anzahl der möglichen Rangierzüge zum Erreichen der Zielposition, sowie in Abhängigkeit des verfügbaren Abstands senkrecht zur Trajektorie in $x$-Richtung zu seitlichen Hindernissen, kann es möglich sein, den Abstands-Schwellenwert größer oder kleiner zu wählen. Wenn nämlich zum Beispiel das Steuern der Fahrt des Zugfahrzeugs in einem durch links- und rechtsseitig befindliche Hindernisse begrenzten Raum geschieht, so kann es notwendig sein, dass der Abstands-Schwellenwert vergleichsweise gering gewählt wird. Dies kann wiederum die Verwendung von mehreren Rangierzügen zum Erreichen der Zielposition, zum Beispiel unter Verwendung von Vorwärts- und Rückwärtsfahrtabschnitten, erfordern. Steht jedoch mehr Platz zum Erreichen der Zielposition senkrecht zur Trajektorie, d.h. in $x$-Richtung, zur Verfügung, so kann es möglich sein, ohne Verwenden von mehreren Rangierzügen, zum Beispiel in einzügigen Rangierverfahren, die Zielposition derart zu erreichen, dass gleichzeitig der Abstands-Schwellenwert gering gewählt werden kann. Ein Szenario in dem freies, einzügiges Rangieren möglich ist, wäre zum Beispiel das Rangieren auf einer freien Wiese oder einem freien Feld.

Diesbezüglich kann das Steuern so erfolgen, dass der senkrecht zur Richtung der Trajektorie definierte Abstand zwischen der Trajektorie und der Position des Anhängers kleiner als der Abstands-Schwellenwert ist. Wird auch während des Steuerns der Fahrt, also wenn das Gespann in Bewegung ist, sichergestellt, dass der $x$-Abstand kleiner als der Abstands-Schwellenwert ist, so kann eine Kollision mit möglicherweise senkrecht zu der durch die Trajektorie definierten Richtung befindlichen Objekten während des Rangierens selber verhindert werden. Typischerweise kann ein Szenario, in dem eine solche gezielte Steuerung der Fahrt des Gespanns notwendig ist, das Manövrieren in einer engen Gasse umfassen. Es kann dann möglich sein, während des gesamten Rangierprozesses, sowie in der Zielposition, den x-Abstand zur bestimmten geraden Trajektorie zu minimieren.

Diesbezüglich kann das Verfahren das Auswählen eines ersten oder zweiten Betriebsmodus umfassen, wobei der Abstands-Schwellenwert abhängig von dem ausgewählten Betriebsmodus ist.

Das Auswählen kann z.B. manuell durch einen Benutzer oder automatisch durch entsprechende Umfeld-Sensorik des Gespanns, wie Kamera-Systeme oder Kartendaten etc. erfolgen. Zum Beispiel kann der Abstands-Schwellenwert in dem ersten Betriebsmodus größer sein als in dem zweiten Betriebsmodus. Das bedeutet, dass in dem ersten Betriebsmodus während des Steuerns und / oder in der Zielposition ein größerer Abstand senkrecht zur Trajektorie, also in x-Richtung, erreicht werden kann als in dem zweiten Betriebsmodus. Wenn die Umfeld-Sensorik, z. B. Hindernisse erkennt, so kann der zweite Betriebsmodus ausgewählt werden.

Diesbezüglich kann zum Beispiel im ersten Betriebsmodus das Steuern der Fahrt des Zugfahrzeugs entweder in Vorwärts- oder in Rückwärtsfahrtrichtung geschehen und in dem zweiten Betriebsmodus sowohl in Vorwärts- als auch Rückwärtsfahrtrichtung erfolgen. Hierbei kann in dem ersten Betriebsmodus der Abstands-Schwellenwert größer als in dem zweiten Betriebsmodus sein.

Zum Beispiel kann es, wenn in dem ersten Betriebsmodus das Steuern der Fahrt des Zugfahrzeugs entweder in Vorwärts- oder in Rückwärtsfahrtrichtung geschieht, notwendig sein, auch größere x-Abstände zur Trajektorie während des Steuerns zu realisieren, um die Zielposition erreichen zu können. In einzügigen Rangiertechniken kann es nämlich typischerweise notwendig sein, ein größeres Ausschlagen des Anhängers gegenüber dem Zugfahrzeug bzw. ein größeres Ausholen des Zugfahrzeugs zu erlauben. Der während des Steuerns zurückgelegte Rangierweg kann in dem ersten Betriebsmodus größer als in dem zweiten Betriebsmodus sein.

Gleichzeitig kann eine einzügige Rangiertechnik den Grad des notwendigen Benutzereingriffs verringern, z.B. weil keine, möglicherweise manuellen, Gangwechsel erforderlich sind.

Wird jedoch in dem zweiten Betriebsmodus mehrzügiges Rangieren, d.h. Rangieren sowohl in Vorwärts- als auch in Rückwärtsfahrtrichtung durchgeführt, so kann das Steuern der Fahrt derart erfolgen, dass der Abstands-Schwellenwert zum Beispiel in der Zielposition und/oder während des Steuerns der Fahrt vergleichsweise geringe Werte annimmt. Nämlich kann es möglich sein, durch mehrzügiges Rangieren zu erreichen, dass der x-Abstand zur geraden Trajektorie zu allen Zeitpunkten während des Steuerns und insbesondere in der Zielposition geringe Werte annimmt. Im Allgemeinen kann der Abstands-Schwellenwert während dem Steuern einen anderen Wert annehmen als in der Zielposition. Solche Techniken können z.B. das automatisch gesteuerte Rangieren in einer engen Gasse ermöglichen.

Zum Beispiel kann das Auswählen des ersten oder des zweiten Betriebsmodus manuell durch den Fahrer des Zugfahrzeugs erfolgen. Befindet sich der Fahrer zum Beispiel auf einem freien Feld oder Wiese, so kann er den ersten Betriebsmodus auswählen. In dem ersten Betriebsmodus kann es dann entbehrlich sein, zum Beispiel Gangwechsel oder mehrzügiges Rangieren vorzunehmen. Einzügiges Rangieren zum Beispiel in Vorwärts- oder Rückwärtsfahrtrichtung erlaubt es, die Zielposition entlang der geraden Trajektorie vergleichsweise einfach zu erreichen. Zum manuellen Auswählen des Betriebsmodus kann eine entsprechende Benutzer-Schnittstelle vorgehalten werden, die es dem Benutzer erlaubt mittels eines entsprechend eingerichteten Menüs die Einstellung vorzunehmen. Die Benutzer-Interaktion kann z.B. mittels entsprechender Tasten oder auch durch Spracheingabe erfolgen. In einer Ausführungsform kann diese Benutzer-Schnittstelle einen Taster umfassen, mittels dem es dem Fahrer möglich ist, als einen Soll-Anhängerknickwinkel 0° vorzugeben, also eine parallele Ausrichtung des Anhängers und des Zugfahrzeugs zu der durch die Trajektorie definierten Richtung.

Ein Ist-Anhängerknickwinkel, also der gegenwärtige Anhängerknickwinkel kann dann mit entsprechenden Techniken und unter Beachtung verschiedener Randbedingungen, wie sie durch den ersten und zweiten Betriebsmodus bestimmt werden können, durch den Steuer-Regel-Kreis an den Soll-Anhängerknickwinkel in der Zielposition angeglichen werden. Hierzu sind verschiedene Techniken bekannt.

Es ist aber auch möglich, dass der Betriebsmodus automatisch ausgewählt wird. Zum Beispiel kann es möglich sein, mittels Umfeld-Sensorik des Zugfahrzeugs und/oder des Anhängers die Umgebung zu erkennen und Rückschlüsse darauf zu ziehen, ob Objekte und Hindernisse senkrecht zur durch die Trajektorie definierten Richtung, also in x-Richtung, das Steuern der Fahrt des Zugfahrzeugs beeinträchtigen. Werden solche Objekte erkannt, so kann es möglich sein, in dem zweiten Betriebsmodus den Abstands-Schwellenwert so klein zu wählen, dass während des Steuerns der Fahrt des Zugfahrzeugs und/oder in der Zielposition die erkannten Objekte nicht berührt werden und derart eine Kollision vermieden wird.

Gemäß einem weiteren Aspekt betrifft die Erfindung eine Assistenzvorrichtung zur Fahrtsteuerung eines Zugfahrzeugs mit Anhänger. Die Vorrichtung umfasst ein Positionierelement, welches eingerichtet ist, um die folgenden Schritte durchzuführen: Erfassen einer Position und einer Ausrichtung des Anhängers, Bestimmen einer geraden Trajektorie basierend auf der Position und der Ausrichtung des Anhängers. Die Assistenzvorrichtung gemäß dem gegenwärtig diskutierten Aspekt der Erfindung kann weiterhin ein Steuer-Regel-Element umfassen, welches eingerichtet ist, um den folgenden Schritt durchzuführen: Steuern der Fahrt des Zugfahrzeugs zum Erreichen einer Zielposition, wobei in der Zielposition die Ausrichtung des Anhängers und eine Ausrichtung des Zugfahrzeugs jeweils im Wesentlichen parallel zu einer durch die Trajektorie definierten Richtung sind.

Für eine solche Assistenzvorrichtung können Effekte erzielt werden, welche denjenigen Effekten entsprechen, welche mit einem Verfahren zum Betreiben einer Assistenzvorrichtung gemäß einem voranstehend diskutierten Aspekt der Erfindung erzielt werden können.

Gemäß einem weiteren Aspekt betrifft die Erfindung ein Verfahren zum Betreiben einer Assistenzvorrichtung zur Fahrtsteuerung eines Zugfahrzeugs mit Anhänger. Das Verfahren umfasst das Bestimmen einer Trajektorie und das Erfassen eines gegenwärtigen Ist-Anhängerknickwinkels zwischen dem Zugfahrzeug und dem Anhänger. Das Verfahren umfasst weiterhin das Bestimmen einer gegenwärtigen Ist-Position des Anhängers und das Berechnen eines Soll-Anhängerknickwinkels basierend auf der Trajektorie und einem Abstand der Ist-Position des Anhängers von der Trajektorie. Das Verfahren umfasst weiterhin das Steuern der Fahrt des Zugfahrzeugs, so dass der Ist-Anhängerknickwinkel an den Soll-Anhängerknickwinkel angeglichen wird.

Zum Beispiel kann der Abstand der Ist-Position des Anhängers von der Trajektorie durch den kürzesten Abstand der Ist-Position zu der Trajektorie definiert sein. Es ist aber auch möglich, Abstände zu wählen, welche abweichend von dem kürzesten Abstand, zum Beispiel hin zu größeren Abständen in Fahrtrichtung, gewählt werden. Die Ist-Position kann wie bereits diskutiert durch einen Mittelpunkt bzw. ein Zentrum des Anhängers bestimmt sein oder z.B. durch einen Relativposition in Bezug auf einen Kupplungspunkt des Anhängers mit dem Zugfahrzeug bestimmt sein. Verschiedene Möglichkeiten zur Bestimmung der Position des Anhängers bzw. des Zufahrzeugs sind denkbar, insbesondere wenn eine Orientierung in Bezug auf für das Fahrverhalten maßgebliche Punkte des Gespanns gegeben ist. Dann kann es nämlich möglich sein, die Position, bzw. eine Relativposition des Anhängers bzw. des Zugfahrzeugs aus Odometriedaten des Gespanns zu bestimmen. Insbesondere kann der Ist-Anhängerknickwinkel mittels herkömmlicher Sensorik erfasst werden, welche zum Beispiel optische Techniken oder Kontaktverfahren, zum Beispiel unter Verwendung von Magnetfeld-Drehsensoren, umfassen.

Es sollte verstanden werden, dass der Soll-Anhängerknickwinkel nicht notwendigerweise den endgültig in einer Zielposition zu erreichenden Anhängerknickwinkel bezeichnen muss. Z.B. kann es möglich sein, das Steuern der Fahrt des Zugfahrzeugs zum Erreichen eines endgültigen Anhängerknickwinkels so vorzunehmen, dass einem Regler, etwa einem herkömmlichen "proportional-integral-derivative" (PID)-Regler, während verschiedener zeitlicher Abschnitte des Steuerns unterschiedliche Soll-Anhängerknickwinkel vorgegeben werden. Solche verschiedenen zeitlichen Abschnitte können dann Abschnitten entsprechen, in denen der Abstand der Ist-Position des Anhängers von der Trajektorie jeweils unterschiedlich ist. Dann kann das Erreichen des endgültigen Anhängerknickwinkels durch einen mehrstufigen Regelprozess erreicht werden. Dies kann ein zielgenaueres, robusteres und stabileres Steuern der Fahrt als Effekt haben. Es kann derart auch möglich sein, einer Trajektorie zu folgen, wobei die Trajektorie nicht auf eine gerade Trajektorie beschränkt ist.

Zum Beispiel kann es derart möglich sein, die Trajektorie in Rückwärtsfahrt abzufahren bzw. zu verfolgen. Bei einer geeignet bestimmten Trajektorie kann es zum Beispiel möglich sein, das Gespann zu einem Ziel hin zu steuern, etwa einer Garage oder entlang einer engen Gasse. Es können auch komplexere Trajektorien, etwa für Parkmanöver, realisiert werden. Insbesondere kann es möglich sein, dass die Trajektorie durch das Fahrzeug selbst bestimmt wird. Eine solche Bestimmung kann entweder manuell durch den Fahrer oder einen Benutzer erfolgen aber auch durch geeignete Umfeld-Sensorik automatisch durchgeführt werden. Insbesondere können Techniken zur Bestimmung der Trajektorie verwendet werden, wie sie voranstehend bezüglich eines weiteren Aspekts der Erfindung beschrieben wurden.

Bei solchen Techniken wird ein Teil der Logik der Fahrtsteuerung durch eine entsprechende Systemarchitektur aus der eigentlichen Steuerung und Regelung der Fahrt vorverlagert, indem der Soll-Anhängerknickwinkel entsprechend der Positionierung gegenüber der Trajektorie flexibel vorgegeben wird. Dies kann es erlauben einen herkömmlichen Steuer-Regel-Schaltkreis, etwa einen PID-Regler, für komplexe Fahrtsteuerung, etwa dem Abfahren einer Trajektorie, zu verwenden. Es können z.B. bereits vorhandene PID-Regler mit geringen Hardwareanforderungen weiterverwendet werden. Das Vorgeben des Soll-Anhängerknickwinkels kann z.B. mittels geeigneter Implementierung auf bereits vorhandenen Prozessor-Geräten erfolgen, was eine vergleichsweise geringe Inanspruchnahme von Rechenleistung zur Folge haben kann. Die Vorgabe eines Soll-Anhängerknickwinkels kann hierbei zyklisch mit einer bestimmten Taktperiode erfolgen, etwa in der Größenordnung von 1 kHz oder 20 Hz oder 10 Hz oder 1 Hz. Je nach Taktrate kann die benötigte Rechenleistung veränderlich sein und derart auf die verfügbaren Ressourcen abgestimmt werden. Eine Verringerung der Herstellungs- und Betriebskosten kann durch die geringen Hardware-Anforderungen möglich sein.

Die Fahrt des Zugfahrzeugs kann z.B. mittels Steuerung der Lenkung bzw. des Radeinschlags, der Fahrtrichtung, der Getriebestellung oder der Geschwindigkeit des Gespanns erfolgen. Entsprechende Techniken zur Steuerung einer oder mehrerer dieser Fahrtparameter sind dem Fachmann bekannt, sodass es nicht notwendig ist, hier weitere Details zu diskutieren.

Zum Beispiel kann es möglich sein, dass das Bestimmen der Ist-Position des Anhängers und/oder das Berechnen des Soll-Anhängerknickwinkels weiterhin basierend auf mindestens einem der folgenden Parameter geschieht: Deichsellänge einer Deichsel zwischen dem Zugfahrzeug und dem Anhänger und Odometrie des Zugfahrzeugs mit Anhänger. Insbesondere kann es dann nämlich möglich sein, aufgrund von Auslesen und Überwachen der Odometriedaten des Zugfahrzeugs mit Anhänger bzw. unter Kenntnis der Deichsellänge der Deichsel eine relative Ist-Position des Anhängers in Bezug auf die bestimmte Trajektorie zu bestimmen. Die Odometriedaten können aus einer Gruppe ausgewählt werden, welche die folgenden Elemente umfasst: Fahrtgeschwindigkeit, Radeinschlag des Zugfahrzeugs, Fahrtrichtung, Anhängerknickwinkel, Deichsellänge der Deichsel. Aus solchen Elementen lässt sich die Bewegung bzw. Relativbewegung des Anhängers und des Zugfahrzeugs bestimmen. Dem Fachmann sind entsprechende Techniken bekannt.

Erfindungsgemäss ist der Soll-Anhängerknickwinkel durch eine Achse parallel zur Ausrichtung des Zugfahrzeugs und eine weitere Achse definiert sein, wobei die weitere Achse durch einen Kupplungspunkt des Anhängers mit dem Zugfahrzeugs sowie durch einen zweiten Punkt auf der Trajektorie bestimmt ist. Hierbei kann der zweite Punkt eine bestimmte Entfernung zu einem den Abstand definierenden ersten Punkt haben.

Zum Beispiel kann der erste Punkt derjenige Punkt auf der Trajektorie sein, welcher den Abstand zu der Ist-Position des Anhängers markiert. Zum Beispiel kann der zweite Punkt in einer bestimmten Entfernung in Fahrtrichtung des Gespanns auf der Trajektorie angeordnet sein, wobei hier Fahrtrichtung sowohl Rückwärtsfahrt- als auch Vorwärtsfahrt bezeichnen kann. Die Fahrtrichtung kann abhängig von der Steuerung der Fahrt vorgeben sein. Wird eine Ausrichtung des Gespanns auf den zweiten Punkt, welcher sich in einer bestimmten Entfernung voraus befindet, angestrebt, so kann eine besonders flexible nachfolgende Steuerung erreicht werden. Zum Beispiel kann es möglich sein, ein übertrieben starkes Einlenken des Gespanns zum Erreichen der Trajektorie oder ein besonders geringes Eingreifen in die Fahrtsteuerung zu vermeiden. Insbesondere kann es möglich sein, die Fahrt so zu steuern, dass das Gespann der Trajektorie folgt.

Diesbezüglich kann die bestimmte Entfernung durch Addieren oder Multiplizieren eines Faktors mit dem Abstand erhalten werden. Dies kann bedeuten, dass die bestimmte Entfernung und der Abstand in Bezug stehen bzw. die bestimmte Entfernung basierend auf dem Abstand bestimmt wird. Ist z.B. das Gespann weit von der Trajektorie entfernt, so kann in einer Ausführungsform die Entfernung größer gewählt werden, als für den Fall, dass das Gespann sich bereits auf der Trajektorie befindet. Dies kann es einerseits erlauben, dass der Trajektorie präzise gefolgt wird, sobald sich dass Gespann auf der Trajektorie befindet. Andererseits kann dies ein schrittweises Annähern des Gespanns an die Trajektorie ermöglichen, wenn sich das Gespann noch unter einem bestimmten Abstand zur Trajektorie befindet.

Dies kann in anderen Worten bedeuten, dass eine Differenz zwischen Ist-Anhängerknickwinkel und Soll-Anhängerknickwinkel umso langsamer verringert wird, je geringer diese Differenz ist. Dies kann dazu führen, dass das Gespann bei der Fahrt um die Trajektorie schwingt und sich nur langsam der Trajektorie annähert.

Zum Beispiel kann der Faktor abhängig von einem Betriebsmodus und/oder einer Deichsellänge einer Deichsel zwischen dem Zugfahrzeug und dem Anhänger sein. Ist nämlich zum Beispiel die Deichsellänge besonders groß, so kann bei einer großen Wahl des Faktors erreicht werden, dass der zweite Punkt, welcher den Soll-Anhängerknickwinkel maßgeblich beeinflussen kann, in genügend großer Entfernung in Fahrtrichtung des Gespanns auf der Trajektorie angeordnet ist. Das Steuern der Fahrt des Zugfahrzeugs kann dann unter Rücksichtnahme auf das durch die große Deichsellänge begrenzte Wendevermögen bzw. Rangiervermögen des Gespanns erfolgen. Es erfolgt eine sanfte und schrittweise Annäherung des Gespanns an die Trajektorie durch entsprechende Vorgabe des Soll-Anhängerknickwinkels.

Der Faktor f kann auch abhängig von dem Betriebsmodus ausgewählt werden, d.h. dass die Vorgabe des Soll-Anhängerknickwinkels maßgeblich zum Beispiel durch eine manuelle Benutzereingabe oder ein automatisches Erkennen des Umfelds des Fahrzeugs beeinflusst werden kann. Der Betriebsmodus kann eine Stärke des Einschlagens zum Rangieren bzw. Erreichen der Trajektorie beeinflussen.

Das Berechnen des Soll-Anhängerknickwinkels kann weiterhin das Subtrahieren eines Übersteuerungs-Winkels umfassen. Zum Beispiel kann nach Berechnen des Soll-Anhängerknickwinkels mit den oben genannten Techniken nachträglich ein Übersteuerungs-Winkel subtrahiert oder auch addiert werden, so dass jeweils ein stärkeres oder schwächeres Einschlagen des Gespanns beim Steuern der Fahrt erreicht wird. Dies kann ein schnelleres oder langsameres Annähern des Gespanns an die Trajektorie bewirken.

Zum Beispiel kann durch das Verwenden eines Übersteuerungs-Winkels erreicht werden, dass Schwingen des Gespanns um die Trajektorie verringert wird. Es kann also ein stabiles Fahren entlang der Trajektorie erreicht werden. Entsprechende Effekte können auch durch die Einstellung des Faktors f erreicht werden.

Ein weiterer Aspekt der Erfindung betrifft eine Assistenzvorrichtung zur Fahrtsteuerung eines Zugfahrzeugs mit Anhänger. Die Vorrichtung umfasst ein Positionierelement, welches eingerichtet ist, um die folgenden Schritte durchzuführen: Bestimmen einer Trajektorie und Erfassen eines gegenwärtigen Ist-Anhängerknickwinkels zwischen dem Zugfahrzeug und dem Anhänger, sowie Bestimmen einer gegenwärtigen Ist-Position des Anhängers. Die Vorrichtung umfasst weiterhin ein Steuerelement zur Vorgabe einer Soll-Anhängerknickwinkels, wobei das Steuerelement eingerichtet ist, um den folgenden Schritt durchzuführen: Berechnen eines Soll-Anhängerknickwinkels basierend auf der Trajektorie und einem Abstand der Ist-Position des Anhängers von der Trajektorie. Die Assistenzvorrichtung umfasst weiterhin ein Regelement zum Steuern des Fahrt des Zugfahrzeugs, wobei das Regelement eingerichtet ist, um die Fahrt so zu steuern, dass ein Ist-Anhängerknickwinkel an den Soll-Anhängerknickwinkel angeglichen wird.

Für eine solche Assistenzvorrichtung zur Fahrtsteuerung des Zugfahrzeugs mit dem Anhänger können Effekte erzielt werden, welche den Effekten entsprechen, die für ein Verfahren gemäß einem weiteren Aspekt der Erfindung, wie oben stehend diskutiert, erzielt werden können.

Die Merkmale der vorab beschriebenen Ausführungsformen und Aspekte der Erfindung können miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente.

FIG. 1 zeigt ein an sich vorbekanntes Gespann aus einem Zugfahrzeug und einem Anhänger, welches geeignet ist, um Verfahren zur Fahrtsteuerung des Zugfahrzeugs mit Anhänger gemäß der vorliegenden Erfindung durchzuführen.

FIG. 2 zeigt eine erfindungsgemäße Assistenzvorrichtung zur Fahrtsteuerung eines Zugfahrzeugs mit Anhänger.

FIG. 3A zeigt eine erfindungsgemäße Assistenzvorrichtung zur Fahrtsteuerung eines Zugfahrzeugs mit Anhänger.

FIG. 3B illustriert schematisch Elemente der Assistenzvorrichtung zur Fahrtsteuerung nach FIG. 3A in größerem Detailgrad.

FIG. 4A illustriert einen ersten Rangierschritt, welcher mittels eines erfindungsgemäßen Verfahrens zum Betreiben einer Assistenzvorrichtung zur Fahrtsteuerung eines Zugfahrzeugs mit Anhänger durchgeführt wird.

FIG. 4B illustriert einen zweiten Rangierschritt, welcher auf den ersten Rangierschritt der FIG. 4A folgt.

FIG. 4C illustriert einen dritten Rangierschritt, welcher auf den zweiten Rangierschritt der FIG. 4B folgt.

FIG. 5A illustriert einen ersten Rangierschritt gemäß einer weiteren Ausführungsform eines Verfahrens zum Betreiben einer Assistenzvorrichtung zur Fahrtsteuerung eines Zugfahrzeugs mit Anhänger gemäß der vorliegenden Erfindung.

FIG. 5B illustriert einen zweiten Rangierschritt, welcher auf den ersten Rangierschritt der FIG. 5A folgt.

FIG. 5C illustriert einen dritten Rangierschritt, welcher auf den zweiten Rangierschritt der FIG. 5B folgt.

FIG. 6 zeigt schematisch die Berechnung eines Soll-Anhängerknickwinkels gemäß einem Verfahren zum Betreiben einer Assistenzvorrichtung zur Fahrtsteuerung eines Zugfahrzeugs mit Anhänger gemäß einem weiteren Aspekt der vorliegenden Erfindung.

FIG. 7 ist ein Flussdiagramm eines erfindungsgemäßen Verfahrens zum Betreiben einer Assistenzvorrichtung zur Fahrtsteuerung eines Zugfahrzeugs mit Anhänger.

FIG. 8 ist ein Flussdiagramm eines erfindungsgemäßen Verfahrens zum Betreiben einer Assistenzvorrichtung zur Fahrtsteuerung eines Zugfahrzeugs mit Anhänger.

Nachfolgend werden Techniken zur Fahrtsteuerung eines Zugfahrzeugs mit Anhänger in Bezug auf die Figuren erläutert. Hierbei werden sowohl Techniken dargelegt, welche die Bestimmung einer Trajektorie und einer Zielposition der Fahrtsteuerung betreffen, als auch Techniken, welche die Fahrtsteuerung selbst betreffen.

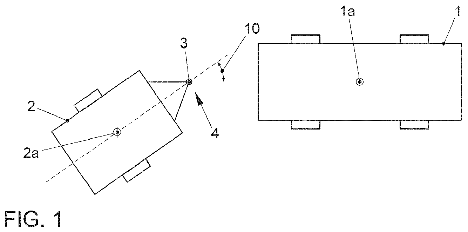

FIG. 1 zeigt ein Zugfahrzeug 1 mit Anhänger 2. Das Zugfahrzeug 1 und der Anhänger 2 sind mittels einer Deichsel 4 und einer Kupplung 3 miteinander verbunden. Die Positionen des Zugfahrzeugs 1 und des Anhängers 2 können zum Beispiel, wie in FIG. 1 illustriert, über deren Mittelpunkte 1a, 2a definiert sein. Insbesondere kann der Ist-Anhängerknickwinkel 10 durch eine den Mittelpunkt 2a des Anhängers 2 mit der Kupplung 3 verbindende Achse (gestrichelte Line), sowie der den Mittelpunkt 1a des Zugfahrzeugs 1 mit der Kupplung 3 verbindenden Achse (gestrichelt - gepunktete Linie) definiert sein.

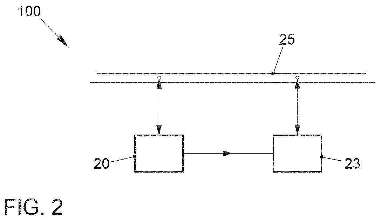

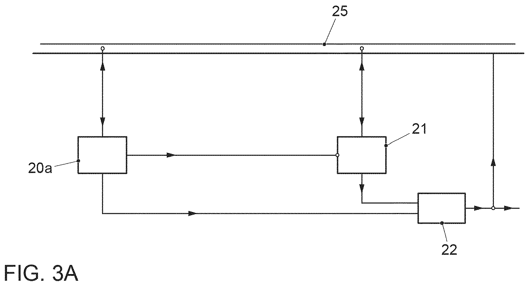

FIG. 2 und 3A illustrieren nachfolgend Vorrichtungen zur Fahrtsteuerung des Zugfahrzeugs 1 mit dem Anhänger 2. Hierbei illustriert FIG. 2 eine Assistenzvorrichtung 100. Die Assistenzvorrichtung 100 kann Teil des Fahrzeugs 1 sein. In FIG. 2 sind ein Positionierelement 20 und ein Steuer-Regel-Element 23 miteinander verbunden. Beide Elemente 20, 23 sind auch mit einem Fahrzeug-Bus 25 zur Datenübertragung verbunden. Zum Beispiel ist es möglich, dass das Positionierelement 20 Informationen über die Odometrie des Fahrzeugs 1 bzw. des Anhänger 2 aus dem Fahrzeug-Bus 25 erhält.

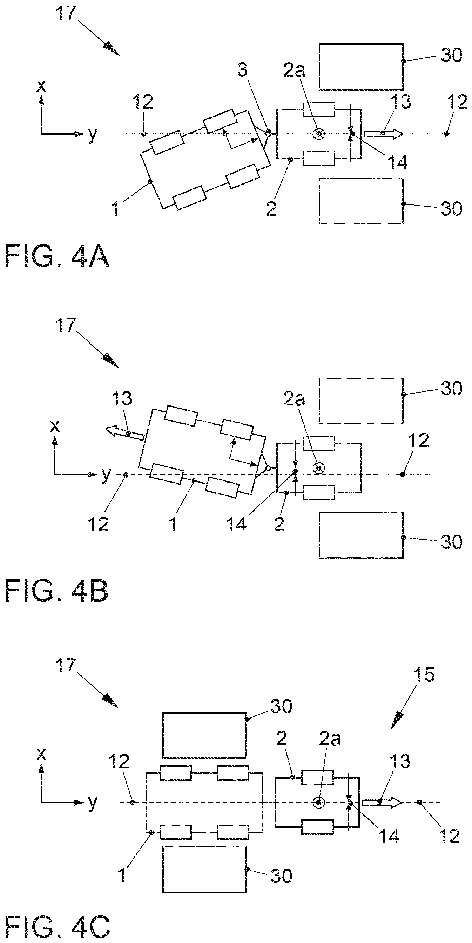

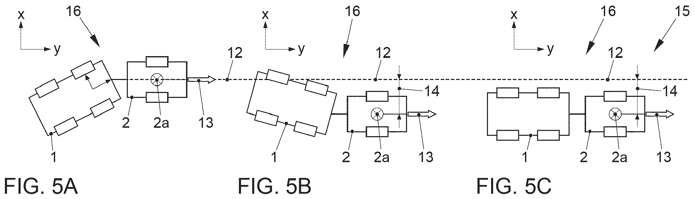

Solche Informationen können umfassen, sind aber nicht beschränkt auf: Reifenumdrehungen, Bruchteile von Reifenumdrehungen, Lenkwinkel, Ist-Anhängerknickwinkel, Fahrtgeschwindigkeit, GPS-Daten, Länge der Deichsel 4. Dem Fachmann sind Techniken bekannt, um solche Informationen geeignet parametrisiert zum Beispiel in Paketdatenformation auf dem Fahrzeug-Bus 25 zur Verfügung zu stellen. Das Positionierelement 20 ist dann eingerichtet, um die Position und die Ausrichtung des Anhängers 2 zu erfassen bzw. zu bestimmen und z. B. eine gerade Trajektorie basierend auf dieser erfassten Position und Ausrichtung des Anhängers 2 zu bestimmen. Zum Beispiel kann, Bezug nehmend auf die FIG. 1, die gerade Trajektorie durch die Verbindungslinie des Anhänger-Mittelpunkts 2a mit der Kupplung 3 (gestrichelte Linie) definiert sein. Die Position und Ausrichtung des Anhängers und / oder des Zugfahrzeugs kann von dem Positionierelement 20 insbesondere relativ in Bezug auf die Trajektorie erfasst werden. Insbesondere kann das Positionierelement 20 eingerichtet sein, die Trajektorie automatisch zu bestimmen. Entsprechende Techniken werden in Bezug auf die FIGs. 4A-4C und 5A-5C nachfolgend erläutert.

In alternativen Ausführungsformen kann das Positionierelement 20 diese Informationen nicht von dem Fahrzeug-Bus 25 erhalten, sondern zum Beispiel durch andere Kopplungen mit entsprechenden Sensorelementen etc. Hierzu sind dem Fachmann verschiedenste Techniken bekannt, solche Informationen zu erstellen und an das Positionierelement 20 geeignet weiterzureichen. Zum Beispiel kann der Ist-Anhängerknickwinkel mittels eines Magnet-Drehsensors oder einer optischen Einrichtung, welche z. B. heckseitig an dem Fahrzeug 1 angebracht ist, erkannt werden.

Das Positionierelement 20 ist weiterhin eingerichtet, um die Information über die bestimmte gerade Trajektorie an das Steuer-Regel-Element 23 weiterzureichen. Dieses Element 23 ist dann eingerichtet, die Fahrt des Gespanns 1, 2 zum Erreichen einer Zielposition zu steuern. Das Steuern der Fahrt kann mittels geeigneter Steuerungs- und Regelungs-Techniken erfolgen. Dem Fachmann sind hierzu verschiedenste Techniken bekannt, welchen gemein ist, dass Ihnen ein Ist-Wert und ein Ziel-Wert vorgegeben wird. Es erfolgt dann eine Angleichung des Ist-Werts an den Ziel-Wert gemäß des konkreten Steuerungs- und Regelungsalgorithmus. Dazu werden verschiedene Fahrtparameter des Zugfahrzeugs 1, etwa Lenkung, Antrieb, Radstellung, Getriebestellung durch das Steuer-Regel-Element 23 gesteuert. Das Element 23 kann hierzu entsprechende Steuerbefehle über den Bus 25 senden und / oder visuelle und / oder akustische Anweisungen an den Fahrer des Fahrzeugs 1 veranlassen.

Eine Assistenzvorrichtung 101 zur Fahrtsteuerung eines Gespanns, welche eine solche Steuerung und Regelung ermöglicht, ist in FIG. 3A dargestellt. Die Systemarchitektur der Vorrichtung 101 umfasst hierbei weiterhin ein Steuerelement 21, welches vorgeschaltet zu einem Regelelement 22, eingerichtet ist, um einen Soll-Anhängerknickwinkel basierend auf der Trajektorie und der Ist-Position des Anhängers berechnen.

Im Detail ist ein Positionierelement 20a ist wiederum mit dem Fahrzeug-Bus 25 gekoppelt. Das Positionierelement 20a in FIG. 3A ist eingerichtet, um eine Trajektorie zu bestimmen. Eine Trajektorie in der Ausführungsform der FIG. 3A muss nicht notwendigerweise gerade sein, kann aber gerade sein. Weiterhin ist das Positionierelement 20a eingerichtet, den gegenwärtigen Ist-Anhängerknickwinkel 10 zu erfassen. Dieses Erfassen kann zum Beispiel mittels Informationen erfolgen, welche auf dem Fahrzeug-Bus 25 verfügbar sind. Weiterhin ist das Positionierelement 20a eingerichtet, die Ist-Position des Anhängers zu bestimmen, was wiederum mittels Informationen aus dem Fahrzeug-Bus 25 erfolgen kann.

Das Positionierelement 20a ist eingerichtet, um basierend auf Odometriedaten, welche es von dem Fahrzeug-Bus 25 erhält, die Ist-Position des Anhängers 2 in Bezug auf die Trajektorie zu berechnen und anschließend dem Steuerelement 21 zur Verfügung zu stellen. In einer anderen Ausführungsform kann das Positionierelement 20a auch eine Absolutposition des Gespanns 1, 2 in Bezug auf die Trajektorie berechnen. Hierzu können zum Beispiel Absolutpositionierungssysteme wie Inertialsysteme oder GPS-Navigation verwendet werden. In jedem Fall sind dem Fachmann verschiedenste Techniken bekannt, welche eine relative oder absolute Positionierung des Zugfahrzeugs 1 mit Anhänger 2 gegenüber der Trajektorie ermöglichen.

Das Steuerelement 21, welches mit dem Positionierelement 20a gekoppelt ist, ist eingerichtet, um basierend auf der von Positionierelement 20a erhaltenen Trajektorie und einem Abstand der Ist-Position des Anhängers von der Trajektorie einen Soll-Anhängerknickwinkel zu berechnen und einem Regelelement 22 bereitzustellen. Dieses Berechnen kann wiederholt durchgeführt werden, etwa wenn sich die Werte wie Ist-Position oder Trajektorie stärker als ein Schwellenwert verändern oder mit einer bestimmten zeitlichen Taktrate. Die zeitliche Taktrate kann etwa in der Größenordnung von 1 kHz oder 20 Hz oder 10 Hz oder 1 Hz liegen.

Die eigentliche Steuerung der Fahrt des Zugfahrzeugs 1 kann dann durch das Regelelement 22 erfolgen, welches unter Maßgabe des Ist-Anhängerknickwinkels und des Soll-Anhängerknickwinkels einen Regelschaltkreis umfasst, der die Fahrtsteuerung vornimmt, um Ist- und Soll-Anhängerknickwinkel aneinander anzugleichen. Insbesondere kann das Regelelement 22 ein herkömmlicher PID-Regler sein.

Hierzu ist das Regelelement 22 wiederum mit dem Fahrzeug-Bus 25 verbunden. Bei Vorhandensein eines elektrisierten Lenksystems kann zum Beispiel das Regelelement 22 die Lenkung des Zugfahrzeugs 1 übernehmen. Es ist auch möglich, dass bei Vorhandensein eines elektrisierten Antriebstrangs das Regelelement 22 eine bestimmte Geschwindigkeit in Vorwärts- oder Rückwärtsrichtung vorgibt. Bei Vorhandensein eines automatischen oder teilautomatischen Getriebes kann das Regelelement 22 weiterhin durch gezielte Gangwahl das Vorwärts- oder Rückwärtsfahren des Gespanns 1, 2 bewirken. Es ist auch möglich, dass manche dieser Elemente Lenkung, Antrieb, Getriebe von einem Fahrer des Zugfahrzeugs 1 unter Anleitung des Regelelements 22 betrieben werden. Zum Beispiel kann das Regelelement 22 mit visuellen und/oder akustischen und/oder haptischen Indikatoren verbunden sein, welchen den Fahrer instruieren, wie das Zugfahrzeug 1 konkret zu steuern ist.

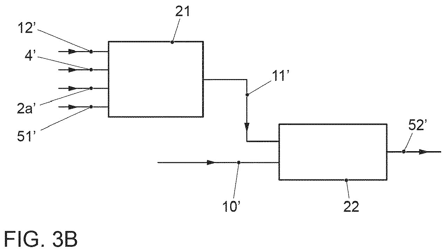

In FIG. 3B ist die Steuerung und Regelung der FIG. 3A, d.h. die Elemente 21, 22, in größerem Detail dargelegt. In FIG. 3B ist illustriert, dass das Steuerelement 21 Daten 4' mit Informationen die Deichsel 4 betreffend erhält, z.B. von Positionierelement 20a. Zum Beispiel können diese Informationen der Daten 4' die Länge der Deichsel 4 bezeichnen. Weiterhin erhält Element 21 Daten 2a', welche die Position des Anhängers 2 betreffen, z.B. von Positionierelement 20a. Zum Beispiel können die Daten 2a' eine Relativ- oder Absolutposition des Mittelpunkts 2a des Anhängers 2 in Bezug auf die Trajektorie bezeichnen. Weiterhin erhält Element 21 Odometriedaten 51', sowie Daten 12', welche die Trajektorie bezeichnen, z.B. von Positionierelement 20a.

Die Daten 2' können eine relative oder absolute Position der Trajektorie in Bezug auf die Ist-Position beinhalten.

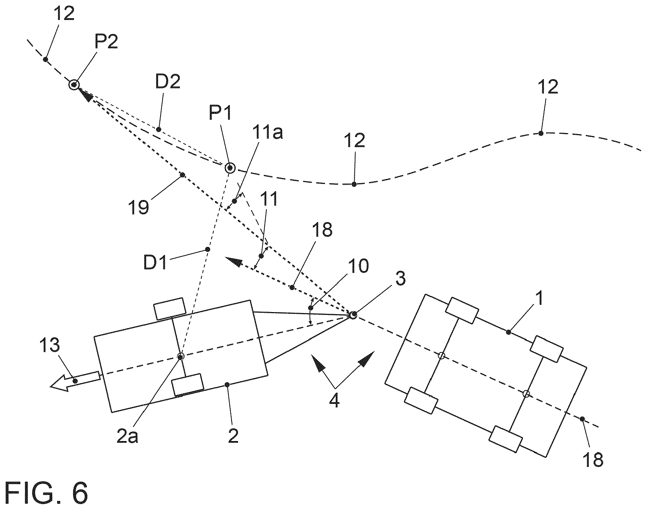

Basierend auf diesen Daten 2a', 4', 12', 51' kann das Steuerelement 21 Daten 11', welche den Soll-Anhängerknickwinkel bezeichnen, an das Regelelement 22 übergeben. Das Regelelement 22 erhält weiterhin Daten 10', welche den Ist-Anhängerknickwinkel 10 bezeichnen. Z.B. kann das Positionierelement 20a diese Daten 10' bereitstellen. Es ist auch möglich, dass die Daten 10' direkt von einem entsprechenden Sensor erhalten werden oder aber von Fahrzeug-Bus 25. Die Berechnung des Soll-Anhängerknickwinkel aus den Daten 2a', 4', 12', 51' durch Element 21 wird nachfolgend in Bezug auf die FIG. 6 näher erläutert.

Regelelement 22 kann dann ausgestaltet sein, basierend auf einem Regelschaltkreis" etwa einem PID-Regler, Steuersignale 52' auszugeben, welche eine Angleichung des Ist-Anhängerknickwinkels 10 an den Soll-Anhängerknickwinkel erreichen. Hierbei sind dem Fachmann verschiedenste Techniken bekannt, Regelelement 22 auszugestalten. Eine dieser Techniken betrifft zum Beispiel einen herkömmlichen PID-Regler. Jedoch sind andere Techniken denkbar. Insbesondere können effizient implementierte Regeltechniken mit geringen Hardware-anforderungen verwendet werden. Dennoch kann die Vorrichtung der FIG. 3A und 3B erlauben, den Anhänger 2 mit dem Zugfahrzeug 1 zum Beispiel bei Rückwärtsfahrt robust und in hoher Genauigkeit die vorgegebene Trajektorie erreichen zu lassen bzw. abfahren zu lassen. Unter anderem kann es möglich sein, komplexere, zum Beispiel geschwungene, gebogene oder kurvige Trajektorien, zum Beispiel für Rangier- und Parkmanöver, abzufahren.

Zum Beispiel kann es möglich sein, die zur Fahrtsteuerung benötigte Rechenleistung zu reduzieren, indem der Soll-Winkel mittels Steuerelement 21 mit geringeren Taktraten ermittelt wird. Insbesondere kann das Regelelement 22 die Regelung mit einer hohen Taktrate durchführen, während die Sollwinkelvorgabe durch das Steuerelement 21 mit einer vergleichsweise geringeren Taktrate erfolgt.

In Bezug auf die FIG. 4A, 4B, 4C sowie FIGs. 5A, 5B 5C wird nachfolgend ein Verfahren zum Betreiben einer Assistenzvorrichtung zur Fahrtsteuerung des Zugfahrzeugs 1 mit dem Anhänger 2 gemäß einem Aspekt der gegenwärtigen Erfindung diskutiert. Ein solches Verfahren kann zum Beispiel mit einer der Vorrichtungen 100, 101 aus FIG. 2 und 3 durchgeführt werden. In diesen Figuren wird insbesondere erläutert, wie die Positionierelemente 20, 20a die Trajektorie bestimmen können.

Hierbei zeigt FIG. 4A die Ausgangslage eines Rangiervorgangs, bei welchem eine Position und eine Ausrichtung des Anhängers 2 erfasst wird. Basierend auf dieser erfassten Position und Ausrichtung wird eine Trajektorie 12 festgelegt, welche in dem Fall der FIG. 4A durch den Mittelpunkt 2a des Anhängers 2 sowie durch die Kupplung 3 definiert ist. Ziel des in Bezug auf diese und die nachfolgenden Figuren 4B, 4C diskutierten Rangiervorgangs ist es, eine Steuerung der Fahrt des Gespanns 1, 2 zum Erreichen einer Zielposition 15 vorzunehmen. Hierbei ist die Zielposition 15 durch eine Ausrichtung des Anhängers 2 und eine Ausrichtung des Zugfahrzeugs 1 jeweils im Wesentlichen parallel zu der durch die Trajektorie 12 definierten Richtung, d.h. entlang der $y$-Richtung (siehe FIG. 4A), definiert. Im Falle der FIG. 4A-4C erfolgt das Steuern der Fahrt basierend auf einem zweiten Betriebsmodus 17, der sowohl Vorwärts- als auch Rückwärtsfahrtabschnitte während des Rangierens beinhaltet. Dies ermöglicht es, einen Abstand 14 in der x-Richtung, d.h. senkrecht zu der durch die Trajektorie 12 definierten Richtung, auf einen vergleichsweise geringen Abstands-Schwellenwert zu begrenzen. In dem Szenario der FIG. 4A ist dies notwendig, da entlang der x-Richtung seitliche Hindernisse 30 einen geringen x-Abstand notwendig machen. Das Szenario der FIG. 4A-4C könnte z. B. eine enge Gasse oder Hofeinfahrt betreffen.

FIG. 4B und 4C zeigen verschiedene Abschnitte des Rangiervorgangs. In FIG. 4B erfolgt eine nach vorn orientierte Fahrt des Gespanns 1, 2. Eine Fahrtrichtung 13 zeigt in Vorwärtsrichtung. In FIG. 4C erfolgt wiederum eine rückwärts orientierte Fahrt des Gespanns 1, 2. Die Fahrtrichtung 13 zeigt in Rückwärtsfahrtrichtung. In den FIG. 4A, 4B und 4C ist jeweils der x-Abstand 14 des Mittelpunkts 2a des Anhängers 2 zu der Trajektorie 12 geringer als ein bestimmter, vergleichsweise geringer Abstands-Schwellenwert. Dies ermöglicht es, die Fahrt des Zugfahrzeugs 1 derart zu steuern, dass eine Kollision mit den Hindernissen 30 vermieden wird.

In anderen Worten erfolgt das Steuern der Fahrt in dem zweiten Betriebsmodus 17 durch mehrzügiges Rangieren, Vorwärts- und Rückwährtsfahrtabschnitte umfassend, derart, dass der Abstand 14 senkrecht zur Trajektorie 12 vergleichsweise gering bzw. im Wesentlichen gleich 0 bleibt. Im Falle der FIG. 4A-4C ist dreizügiges Rangieren gezeigt.

In dem Szenario der FIG. 5A-5C gibt es keine solchen Hindernisse 30. Deshalb erfolgt die Steuerung der Fahrt des Zugfahrzeugs 1 in diesem Ausführungsbeispiel gemäß einem ersten Betriebsmodus 16, der lediglich auf Rückwärtsfahrt des Gespanns 1, 2 zurückgreift. Deshalb nimmt der Abstand 14 in x-Richtung sowohl während des Rangierens (FIG. 5B) als auch in der Zielposition 15 (FIG. 5C) endliche Werte größer 0 an. Dies unterscheidet den ersten Betriebsmodus 16 von dem zweiten Betriebsmodus 17.

Ein Gangwechsel kann dadurch vermieden werden und einzügiges Rangieren ist möglich. Gleichzeitig kann das einzügige Rangieren, wie es in den FIG. 5A-5C dargestellt ist, bedingen, dass in der Zielposition 15 (siehe FIG. 5C) ein endlicher Abstand 14 in x-Richtung zwischen dem Mittelpunkt 2a des Anhängers 2 und der Trajektorie 12, senkrecht zur Trajektorie 14, entsteht. Der Abstand 14 ist von den Details des Rangiervorgangs, d.h. der Steuerung der Fahrt des Zugfahrzeugs 1, abhängig. Insbesondere wird sichergestellt, dass der Abstand 14 immer kleiner oder gleich einem Abstands-Schwellenwert ist. In dem ersten Betriebsmodus 16, welcher in den FIG. 5A-5C illustriert ist, kann dieser Abstand-Schwellenwert größer sein, als in dem zweiten Betriebsmodus 17, welcher in den FIG. 4A-4C illustriert ist. Es kann z. B. möglich sein, den Abstand 14 vor Beginn des Steuern bzw. des Rangierens jeweils für den ersten und zweiten Betriebsmodus 16, 17 vorzuberechnen und abhängig davon eine Auswahl des ersten oder zweiten Betriebsmodus 16, 17 durchzuführen.

Durch das Verfahren, wie es in Bezug auf die FIG. 4A-4C und 5A-5C beschrieben wurde, ist es möglich, besonders flexible und einfach die Zielposition 15 mittels Festlegens der Trajektorie 12 in den Ausgangssituationen (siehe FIG. 4A und 5A) zu bestimmen. Dies kann z. B. durch eine entsprechende Benutzer-Schnittstelle durch den Fahrer des Fahrzeugs 1 vorgenommen werden.

In Bezug auf die FIG. 6 wird nun nachfolgend ein weiteres Verfahren zur Fahrtsteuerung des Zugfahrzeugs 1 mit dem Anhänger 2 beschrieben, welches das Erreichen der Trajektorie 12 ermöglicht. In anderen Worten zeigt die FIG. 6 Techniken, welche das Ermitteln des Soll-Anhängerknickwinkels, also der Daten 11' durch Steuerelement 21 in FIG. 3B, für eine bereits bestimmte Trajektorie 12 erlauben.

Im Fall der FIG. 6 ist die Trajektorie 12 im Allgemeinen nicht gerade, sondern zum Beispiel geschwungen bzw. gekrümmt. Jedoch kann die Trajektorie 12 auch gerade sein. Wie in Bezug auf die FIG. 3A und 3B voranstehend dargelegt wurde, kann mittels einer geeigneten Vorrichtung 101 die Ist-Position des Anhängers, insbesondere relativ in Bezug auf die Trajektorie 12, bestimmt werden. Ein Abstand D1 charakterisiert die relative Positionierung des Mittelpunkts 2a des Anhängers 2 zu der Trajektorie 12. Zum Beispiel kann der Abstand D1 der kürzeste Abstand zwischen dem Mittelpunkt 2a und der Trajektorie 12 sein. Der Punkt P1 bezeichnet die Position auf der Trajektorie 12, welcher den Abstand D1 beschreibt. Die Position des Mittelpunkts 2a kann aus Odometriedaten des Gespanns 1,2 mittels Einheit 20, 20a berechnet werden.

Im Falle der FIG. 6 fährt das Gespann 1, 2 rückwärts, wie durch die Fahrtrichtung 13 indiziert ist. Abhängig von dem Abstand D1 und zum Beispiel der Fahrtrichtung 13 wird ein zweiter Punkt P2 auf der Trajektorie 12 bestimmt. Der zweite Punkt P2 ist in einer bestimmten Entfernung D2 gegenüber dem ersten Punkt P1 in Fahrtrichtung angeordnet. Eine weitere Achse 19, die durch die gerade Verbindung zwischen der Kupplung 3 und dem Punkt P2 definiert ist, bestimmt zusammen mit der Längsachse 18 des Zugfahrzeugs 1 den Soll-Anhängerknickwinkel 11. Das Regelelement 22 kann eine Steuerung der Fahrt des Zugfahrzeugs 1 so vornehmen, dass der Ist-Anhängerknickwinkel 10 an den Soll-Anhängerknickwinkel 11 angeglichen wird. Dadurch wird bewirkt, dass sich das Gespann 1, 2 der Trajektorie 12 annähert; und für den Fall, dass sich das Gespann 1, 2 auf der Trajektorie 12 befindet, dass es der Trajektorie 12 folgt.

Insbesondere können die Entfernung D2 und der Abstand D1 miteinander in Bezug stehen, beispielsweise mittels der Formel

$$D2 = f \cdot D1, \qquad (1)$$

oder

$$D2 = D1 - f. \qquad (2)$$

Hierbei bezeichnet der Faktor f eine Beziehung zwischen der Entfernung D2 und dem Abstand D1. Der Faktor f kann zum Beispiel von einem Betriebsmodus und/oder der Länge der Deichsel 4 oder anderen Fahrtparametern wie etwa Geschwindigkeit des Gespanns 1,2 abhängig sein oder voreingestellt sein oder von den Eigenschaften des Regelelements 22 abhängig sein. Ist nämlich zum Beispiel die Länge der Deichsel 4 besonders lang, so kann es notwendig sein, den Faktor f derart zu wählen, dass der Punkt P2 in genügend großer Entfernung auf der Trajektorie 12 in Fahrtrichtung 13 vor dem Gespann 1, 2 liegt. Dementsprechend kann sichergestellt werden, dass kein zu starker Eingriff in die Lenkung bzw. sonstigen Betriebsparameter des Zugfahrzeugs 1 geschieht und eine graduelle Annäherung des Gespanns 1,2 an die Trajektorie erfolgt.

Diesbezüglich kann es zum Beispiel möglich sein, nachdem der Soll-Anhängerknickwinkel 11 mittels des voranstehenden Verfahrens berechnet wurde, zum Beispiel einen festen Übersteuerungswinkel 11a von dem Soll-Anhängerknickwinkel abzuziehen oder zu addieren, um eine schnellere oder langsamere Annäherung des Gespanns 1, 2 an die Trajektorie 12 durch gezieltes Übersteuern zu bewirken. Zum Beispiel kann dadurch erreicht werden, dass das Gespann 1, 2 die Trajektorie schneller oder langsamer erreicht. Dies kann in Bezug auf eine Optimierung der Regelung Vorteile aufweisen. Auch kann es möglich sein, ein Überschwingen bei Erreichen der Trajektorie zu verhindern. Diesbezüglich kann es auch möglich sein, den Parameter f entsprechend anzupassen, z.B. zu vergrößern oder zu verkleinern.

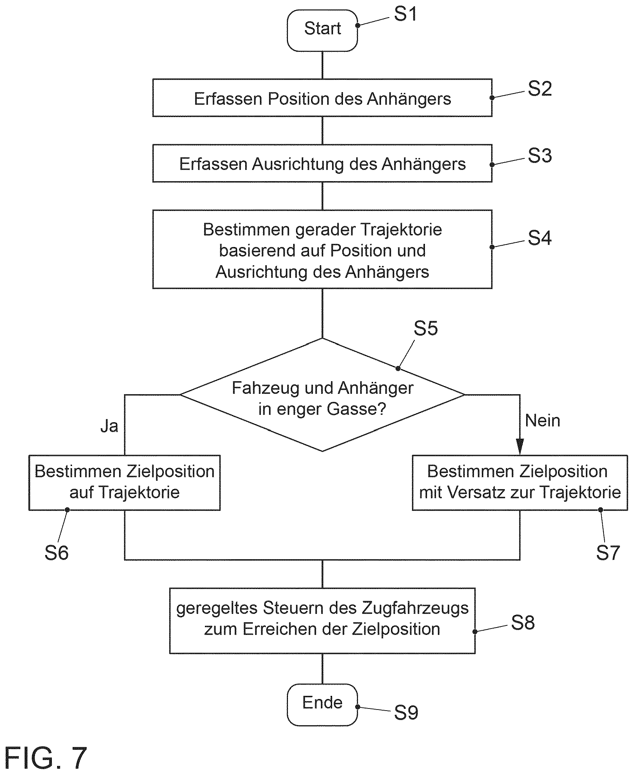

Nachfolgend wird in Bezug auf die FIG. 7 anhand eines Flussdiagramms ein Verfahren zum Betreiben einer Assistenzvorrichtung zur Fahrtsteuerung des Zugfahrzeugs 1 mit dem Anhänger 2 beschrieben. Das Verfahren beginnt mit Schritt S1. Zunächst erfolgt in Schritt S2 ein Erfassen der Position des Anhängers 2. Das Erfassen der Position des Anhängers 2 in Schritt S1 kann zum Beispiel mittels Odometriedaten und/oder anderer Sensordaten erfolgen. Die Position des Anhängers 2 kann zum Beispiel durch den Mittelpunkt 2a des Anhängers 2 bestimmt sein.

Dann erfolgt in Schritt S3 das Erfassen der Ausrichtung des Anhängers. Das Erfassen der Ausrichtung des Anhängers kann zum Beispiel eine Absolutorientierung des Anhängers in Bezug auf ein Referenzkoordinatensystem bezeichnen oder eine relative Ausrichtung der Längsachse des Anhängers 2 in Bezug auf die Längsachse des Zugfahrzeugs 1. Derart kann auch der Anhängerknickwinkel 10 bestimmt werden.

Daraufhin kann in Schritt S4 das Bestimmen der Trajektorie 12 basierend auf der Position und der Ausrichtung des Anhängers, wie sie in Schritt S2 und S3 bestimmt wurden, erfolgen. Insbesondere kann die Trajektorie 12 relativ in Bezug auf die Position bzw. die Ausrichtung des Anhängers 2 bestimmt werden. Zum Beispiel kann die Trajektorie 12 derart bestimmt werden, dass sie gerade ist und parallel zur Längsachse des Anhängers 2 liegt, d.h. durch die Kupplung 3 und den Mittelpunkt 2a definiert ist.

In Schritt S5 wird anschließend überprüft, ob das Gespann 1, 2 in einer engen Gasse befindlich ist, d. h. ob in Abständen senkrecht zu der durch die Trajektorie definierten Richtung (x-Richtung) Hindernisse 30 befindlich sind. Diese Überprüfung kann auch mittels einer Benutzer-Auswahl über eine geeignete Benutzer-Schnittstelle erfolgen. In Schritt S5 kann optional der Abstand 14 senkrecht zur Trajektorie 12 während des Steuerns und/oder in der Zielposition 15 abgeschätzt bzw. ausgerechnet werden. Die Überprüfung in Schritt S5 kann auf dem abgeschätzten Abstand 14 basieren.

In Abhängigkeit von dem Ausgang der Überprüfung in Schritt S5 erfolgt das Bestimmen der Zielposition 15 jeweils in den Schritten S6 und S7. Hierbei wird in Schritt S6 die Zielposition 15 auf oder nahe bei der Trajektorie 12 bestimmt, d.h. der Abstand 14 der Zielposition 15 senkrecht zur Trajektorie 12 wird möglichst klein gewählt. Dies entspricht dem zweiten Betriebsmodus 17, der in Situationen bevorzugt werden kann, in denen die Hindernisse 30 links- und rechtsseitig der Trajektorie 12 den zum Rangieren verfügbaren Platz beschränken. In Schritt S7 hingegen kann die Zielposition 15 mit einem Versatz zur Trajektorie, d.h. mit einem Abstand senkrecht zur Trajektorie in x-Richtung, bestimmt werden. Da der zum Rangieren verfügbare Platz nicht durch Hindernisse 30 beschränkt ist, ist ein solcher Versatz akzeptabel. Insbesondere kann ein solcher Versatz ermöglichen, dass das Rangieren bzw. das Steuern der Fahrt des Zugfahrzeugs 1 lediglich in einer Fahrtrichtung erfolgt, d.h. einzügig anstatt mehrzügig wie möglicherweise im zweiten Betriebsmodus 17. In anderen Worten kann ein den Abstand 14 limitierender Abstands-Schwellenwert in Schritt S7 größer sein als in Schritt S6.

Die Zielposition 15 kann in den Schritten S6 und S7 jeweils unter Maßgabe einer bestimmten Anordnung entlang der Trajektorie 12, d.h. in y-Richtung, erfolgen. Es ist aber auch möglich, die Anordnung in y-Richtung unbestimmt zu lassen. Dann kann z.B. der Fahrer während des Rangierens selbst diese vorgeben.

Das geregelte Steuern des Zugfahrzeugs 1 zum Erreichen der Zielposition 15 erfolgt anschließend in Schritt S8. Je nach relativer Ausrichtung der Position des Gespanns 1, 2 in Bezug auf die Zielposition 15 kann das Steuern des Zugfahrzeugs 1 mehrzügig oder einzügig erfolgen, wie oben stehend dargelegt. Insbesondere kann das Steuern optional unter Maßgabe eines während des Steuerns einzuhaltenden Maximalabstands senkrecht zur Trajektorie in x-Richtung erfolgen, um einer Kollision mit senkrecht zur Traktorie befindlichen Hindernissen 30 vorzubeugen. Ist die Zielposition 15 erreicht, endet in Schritt S9 das Verfahren.

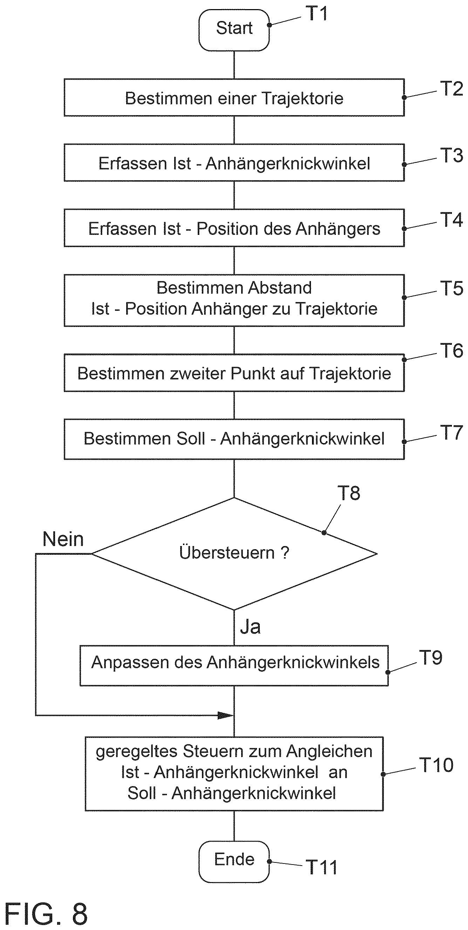

In FIG. 8 illustriert ein Flussdiagramm ein weiteres Verfahren zum Betreiben einer Assistenzvorrichtung zur Fernsteuerung des Zugfahrzeugs 1 mit Anhänger 2. Insbesondere betrifft dieses Verfahren Details des geregelten Steuerns des Zugfahrzeugs 1, d.h. des Schritts S8 der FIG. 7.

Das Verfahren beginnt in Schritt T1. Zunächst erfolgt in Schritt T2 das Bestimmen der Trajektorie 12, zum Beispiel anhand der Schritte S2-S4 der vorangehend diskutierten FIG. 7. In Schritt T3 wird der Ist-Anhängerknickwinkel 10 erfasst. Das Erfassen des Ist-Anhängerknickwinkels 10 kann mittels geeigneter Sensorik, wie sie dem Fachmann bekannt ist, erfolgen.

Anschließend erfolgt in Schritt T4 das Erfassen der Ist-Position des Anhängers 2. Wie oben stehend in Bezug auf den Schritt S2 der FIG. 7 dargelegt, kann die Ist-Position des Anhängers 2 zum Beispiel in Mittelpunkt 2a des Anhängers 2 bestimmt werden. Es ist auch möglich, lediglich die relative Ist-Position des Anhängers 2 in Bezug auf die in Schritt T2 bestimmte Trajektorie 12 zu erfassen.

In Schritt T5 wird der Abstand D1 der in Schritt T4 bestimmten Ist-Position des Anhängers 2 zu der Trajektorie 12 bestimmt. Zum Beispiel kann dieser Abstand D1 der kürzeste Abstand D1 zur Trajektorie 12 sein oder aber ein Abstand, welcher nahe bei dem kürzesten Abstand gelegen ist. Der in Schritt T5 bestimmte Abstand definiert den Punkt P1 auf der Trajektorie.

Anschließend erfolgt in Schritt T6 das Bestimmen eines zweiten Punkts P2 auf der Trajektorie. Der zweite Punkt P2 ist in einer bestimmten Entfernung D2 gegenüber dem ersten Punkt P1, wie er in Schritt T6 anhand des Abstands bestimmt wurde, angeordnet. In Schritt T7 wird basierend auf dem in Schritt T6 bestimmten zweiten Punkt P2 der Soll-Anhängerknickwinkel 11 anhand der Achse zwischen der Kupplung 3 und dem zweiten Punkt P2, sowie der Achse durch den Mittelpunkt 1a des Fahrzeugs 1 und der Kupplung 3 bestimmt.

In Schritt T8 wird anschließend überprüft, ob ein Übersteuern gewünscht ist. Diese Überprüfung kann zum Beispiel anhand einer manuellen Benutzereingabe oder automatisch detektierter Parameter, zum Beispiel Umfeldparameter, erfolgen. Diese Bestimmung kann auch in Abhängigkeit von anderen Parametern der vorangehenden Schritte, insbesondere des bestimmten Abstands D1, erfolgen. Wird in Schritt T8 entschieden, dass ein Übersteuern stattfinden soll, so wird in Schritt T9 der Soll-Anhängerknickwinkel 11 angepasst. Im Allgemeinen wird in Schritt T9 der Soll-Anhängerknickwinkel 11 derart angepasst, dass beim nachfolgenden geregelten Steuern in Schritt T10 das Gespann 1, 2 die Trajektorie 12 schneller erreicht. Wird jedoch in Schritt T8 festgestellt, dass ein Übersteuern nicht gewünscht ist, so wird der Soll-Anhängerknickwinkel 11 nicht angepasst. In jedem Fall erfolgt in Schritt T10 das geregelte Steuern des Gespanns 1, 2 zum Angleichen des Ist-Anhängerknickwinkels 10 an den Soll-Anhängerknickwinkel 11. Hierzu kann eine Regelungstechnik, wie sie dem Fachmann bekannt ist, zum Beispiel unter Verwendung eines PID-Reglers, verwendet werden. Der PID-Regler kann als Eingang den Soll-Anhängerknickwinkel 11 und den Ist-Anhängerknickwinkel 10 erhalten.

Während die Erfindung detailliert durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Betreiben einer Assistenzvorrichtung (100, 101) zur Fahrtsteuerung eines Zugfahrzeugs (1) mit Anhänger (2), das Verfahren umfassend:

    - Bestimmen einer Trajektorie (12),
    - Erfassen eines gegenwärtigen Ist-Anhängerknickwinkels (10) zwischen dem Zugfahrzeug (1) und dem Anhänger (2),
    - Bestimmen einer gegenwärtigen Ist-Position des Anhängers (2),
    - Berechnen eines Soll-Anhängerknickwinkels (11) basierend auf der Trajektorie (12) und einem Abstand (D1) der Ist-Position des Anhängers (2) von der Trajektorie (12),
    - Steuern der Fahrt des Zugfahrzeugs (1), sodass der Ist-Anhängerknickwinkel (10) an den Soll-Anhängerknickwinkel (11) angeglichen wird,

wobei der Soll-Anhängerknickwinkel (11) durch eine Achse (18) parallel zur Ausrichtung des Zugfahrzeugs (1) und eine weitere Achse (19) definiert ist, **dadurch gekennzeichnet, dass** die weitere Achse (19) durch einen Kupplungspunkt (3) des Anhängers (2) mit dem Zugfahrzeug (1), sowie durch einen zweiten Punkt (P2) auf der Trajektorie (12) bestimmt ist,

wobei der zweite Punkt (P2) eine bestimmte Entfernung (D2) zu einem den Abstand (D1) definierenden ersten Punkt (P1) hat.

2. Verfahren nach Anspruch 1, wobei das Bestimmen der Ist-Position des Anhängers (2) und / oder das Berechnen des Soll-Anhängerknickwinkels (11) weiterhin auf mindestens einem der folgenden Parameter basiert:

    - Deichsellänge einer Deichsel (4) zwischen dem Zugfahrzeug (1) und dem Anhänger (2); und
    - Odometrie des Zugfahrzeugs (1) mit Anhänger (2)

3. Verfahren nach Anspruch 1, wobei die bestimmte Entfernung (D2) durch Addieren oder Multiplizieren eines Faktors (f) mit dem Abstand (D1) erhalten wird.

4. Verfahren nach einem der Ansprüche 1 oder 3, wobei der Faktor (f) abhängig von einem Betriebsmodus und / oder einer Deichsellänge einer Deichsel (4) zwischen dem Zugfahrzeug (1) und dem Anhänger ist.

5. Verfahren nach einem der Ansprüche 1 - 4, wobei das Berechnen des Soll-Anhängerknickwinkels (11) weiterhin das Subtrahieren eines Übersteuerungs-Winkels (11a) umfasst.

6. Assistenzvorrichtung (101) zur Fahrtsteuerung eines Zugfahrzeugs (1) mit Anhänger, die Vorrichtung umfassend:

    - ein Positionierelement, welches eingerichtet ist, um die folgenden Schritte durchzuführen:

- Bestimmen einer Trajektorie (12),
- Erfassen eines gegenwärtigen Ist-Anhängerknickwinkels (10) zwischen dem Zugfahrzeug (1) und dem Anhänger,
- Bestimmen einer gegenwärtigen Ist-Position des Anhängers (2),

- ein Steuerelement zur Vorgabe eines Soll-Anhängerknickwinkels (11), wobei das Steuerelement eingerichtet ist, um den folgenden Schritt durchzuführen:

- Berechnen eines Soll-Anhängerknickwinkels (11) basierend auf der Trajektorie (12) und einem Abstand (D1) der Ist-Position des Anhängers (2) von der Trajektorie (12),

- ein Regelelement zum Steuern der Fahrt des Zugfahrzeugs (1), wobei das Regelelement eingerichtet ist, um die Fahrt so zu steuern, dass ein Ist-Anhängerknickwinkel (10) an den Soll-Anhängerknickwinkel (11) angeglichen wird,

wobei der Soll-Anhängerknickwinkel (11) durch eine Achse (18) parallel zur Ausrichtung des Zugfahrzeugs (1) und eine weitere Achse (19) definiert ist, **dadurch gekennzeichnet, dass** die weitere Achse (19) durch einen Kupplungspunkt (3) des Anhängers (2) mit dem Zugfahrzeug (1), sowie durch einen zweiten Punkt (P2) auf der Trajektorie (12) bestimmt ist,
wobei der zweite Punkt (P2) eine bestimmte Entfernung (D2) zu einem den Abstand (D1) definierenden ersten Punkt (P1) hat.

7. Assistenzvorrichtung (101) nach Anspruch 6, wobei die Assistenzvorrichtung (100, 101) eingerichtet ist, um ein Verfahren nach einem der Ansprüche 1 - 5 durchzuführen.

**Claims**

1. Method for operating an assistance device (100, 101) for controlling the travel of a towing vehicle (1) with a trailer (2), the method comprising:

- determining a trajectory (12),
- sensing a current actual trailer bending angle (10) between the towing vehicle (1) and the trailer (2),
- determining a current actual position of the trailer (2),
- computing a setpoint trailer bending angle (11) on the basis of the trajectory (12) and a distance (D1) of the actual position of the trailer (2) from the trajectory (12),
- controlling the travel of the towing vehicle (1), so that the actual trailer bending angle (10) is brought into line with the setpoint trailer bending angle (11),

wherein the setpoint trailer bending angle (11) is defined by an axis (18) parallel to the orientation of the towing vehicle (1) and by a further axis (19), **characterized in that** the further axis (19) is determined by a coupling point (3) from the trailer (2) to the towing vehicle (1), and by a second point (P2) on the trajectory (12), wherein the second point (P2) is at a particular distance (D2) from a first point (P1) that defines the distance (D1).

2. Method according to Claim 1, wherein the determination of the actual position of the trailer (2) and/or the computation of the setpoint trailer bending angle (11) are furthermore based on at least one of the following parameters:

- drawbar length of a drawbar (4) between the towing vehicle (1) and the trailer (2); and
- odometry of the towing vehicle (1) with the trailer (2).

3. Method according to Claim 1, wherein the determined distance (D2) is obtained by adding or multiplying a factor (f) to/by the distance (D1).

4. Method according to either of Claims 1 and 3, wherein the factor (f) is dependent on a mode of operation and/or a drawbar length of a drawbar (4) between the towing vehicle (1) and the trailer.

5. Method according to one of Claims 1-4, wherein the computation of the setpoint trailer bending angle (11) furthermore comprises the subtraction of an oversteer angle (11a).

6. Assistance device (101) for controlling the travel of a towing vehicle (1) with a trailer, the device comprising:

- a positioning element which is set up to carry out the following steps:

- determining a trajectory (12),
- sensing a current actual trailer bending angle (10) between the towing vehicle (1) and the trailer,
- determining a current actual position of the trailer (2),

- a control element for prescribing a setpoint trailer bending angle (11), wherein the control element is set up to carry out the following step:

- computing a setpoint trailer bending angle (11) on the basis of the trajectory (12) and a distance (D1) of the actual position of the trailer (2) from the trajectory (12),

- a regulating element for controlling the travel of the towing vehicle (1), wherein the regulating element is set up to control the travel such that an actual trailer bending angle (10) is brought into line with the setpoint trailer bending angle (11),

wherein the setpoint trailer bending angle (11) is defined by an axis (18) parallel to the orientation of the towing vehicle (1) and by a further axis (19), **characterized in that** the further axis (19) is determined by a coupling point (3) from the trailer (2) to the towing vehicle (1), and by a second point (P2) on the trajectory (12), wherein the second point (P2) is at a determined distance (D2) from a first point (P1) that defines the distance (D1).

7. Assistance device (101) according to Claim 6, wherein the assistance device (100, 101) is set up to carry out a method according to one of Claims 1-5.


**Revendications**

1. Procédé de fonctionnement d'un dispositif d'assistance (100, 101) pour le pilotage d'un véhicule de traction (1) avec remorque (2), le procédé comprenant les étapes suivantes:

    - déterminer une trajectoire (12),
    - détecter un angle actuel réel (10) d'articulation de la remorque entre le véhicule de traction (1) et la remorque (2),
    - déterminer une position réelle actuelle de la remorque (2),
    - calculer un angle de consigne (11) d'articulation de la remorque sur la base de la trajectoire (12) et d'une distance (D1) entre la position réelle de la remorque (2) et la trajectoire (12),
    - commander le déplacement du véhicule de traction (1) de telle manière que l'angle réel (10) d'articulation de la remorque soit égal à l'angle de consigne (11) d'articulation de la remorque,

dans lequel l'angle de consigne (11) d'articulation de la remorque est défini par un axe (18) parallèle à l'orientation du véhicule de traction (1) et un autre axe (19), **caractérisé en ce que** l'autre axe (19) est déterminé par un point d'attelage (3) de la remorque (2) au véhicule de traction (1), ainsi que par un deuxième point (P2) situé sur la trajectoire (12),

dans lequel le deuxième point (P2) présente une distance déterminée (D2) d'un premier point (P1) définissant la distance (D1).

2. Procédé selon la revendication 1, dans lequel la détermination de la position réelle de la remorque (2) et/ou le calcul de l'angle de consigne (11) d'articulation de la remorque se base en outre sur au moins un des paramètres suivants:

    - la longueur d'attelage d'un timon (4) entre le véhicule de traction (1) et la remorque (2); et
    - l'odométrie du véhicule de traction (1) avec une remorque (2).

3. Procédé selon la revendication 1, dans lequel la distance déterminée (D2) est obtenue par l'addition ou la multiplication d'un facteur (f) avec la distance (D1).

4. Procédé selon une des revendications 1 ou 3, dans lequel le facteur (f) dépend d'un mode de fonctionnement et/ou d'une longueur d'attelage d'un timon (4) entre le véhicule de traction (1) et la remorque.

5. Procédé selon l'une quelconque des revendications 1 à 4, dans lequel le calcul de l'angle de consigne (11) d'articulation de la remorque comprend en outre la soustraction d'un angle de survirage (11a).

6. Dispositif d'assistance (101) pour le pilotage d'un véhicule de traction (1) avec remorque, le dispositif comprenant:

    - un élément de positionnement, qui est conçu pour exécuter les étapes suivantes:

        - déterminer une trajectoire (12);
        - détecter un angle actuel réel (10) d'articulation de la remorque entre le véhicule de traction (1) et la remorque,
        - déterminer une position réelle actuelle de la remorque (2),

    - un élément de commande pour prédéfinir un angle de consigne (11) d'articulation de la remorque, dans lequel l'élément de commande est conçu pour exécuter l'étape suivante:

        - calculer un angle de consigne (11) d'articulation de la remorque sur la base de la trajectoire (12) et d'une distance (D1) entre la position réelle de la remorque (2) et la trajectoire (12),

    - un élément de réglage pour commander le déplacement du véhicule de traction (1), dans lequel l'élément de réglage est conçu pour commander le déplacement de telle manière qu'un angle réel (10) d'articulation de la remorque soit égal à l'angle de consigne (11) d'articulation de la remorque,

dans lequel l'angle de consigne (11) d'articulation de la remorque est défini par un axe (18) parallèle à l'orientation du véhicule de traction (1) et un autre axe (19),

**caractérisé en ce que** l'autre axe (19) est déterminé par un point d'attelage (3) de la remorque (2) au véhicule de traction (1), ainsi que par un deuxième point (P2) situé sur la trajectoire (12),

dans lequel le deuxième point (P2) présente une distance déterminée (D2) d'un premier point (P1) définissant la distance (D1).

7. Dispositif d'assistance (101) selon la revendication 6, dans lequel le dispositif d'assistance (100, 101) est conçu pour exécuter un procédé selon l'une quelconque des revendications 1 à 5.

FIG. 1

FIG. 2

EP 2 860 084 B1

FIG. 3A

FIG. 3B

FIG. 4A

FIG. 4B

FIG. 4C

FIG. 5A

FIG. 5B

FIG. 5C

FIG. 6

Start — S1

Erfassen Position des Anhängers — S2

Erfassen Ausrichtung des Anhängers — S3

Bestimmen gerader Trajektorie
basierend auf Position und
Ausrichtung des Anhängers — S4

S5

Fahzeug und Anhänger
in enger Gasse?

Ja

Nein

Bestimmen Zielposition
auf Trajektorie

S6

Bestimmen Zielposition
mit Versatz zur Trajektorie

S7

geregeltes Steuern des Zugfahrzeugs
zum Erreichen der Zielposition — S8

Ende — S9

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10322828 A1
- US 2007027581 A